# EUROPÄISCHE PATENTSCHRIFT

(11) **EP 0 762 948 B1**
(45) Veröffentlichungstag und Bekanntmachung des Hinweises auf die Patenterteilung: **02.09.1998**
(21) Anmeldenummer: 95919967.0
(22) Anmeldetag: 01.06.1995
(51) Int. Cl.: B25D 17/08, B23B 31/12

(54) **WERKZEUGHALTER FÜR EINE HANDBOHRMASCHINE, INSBESONDERE BOHRHAMMER**
TOOLHOLDER FOR A HAND DRILL, IN PARTICULAR A HAMMER DRILL
PORTE-OUTIL POUR PERCEUSE MANUELLE, NOTAMMENT POUR MARTEAU-FOREUR

(30) Priorität: 07.06.1994 DE 4419826
(43) Veröffentlichungstag der Anmeldung: 19.03.1997
(73) Patentinhaber: ROBERT BOSCH GMBH, 70442 Stuttgart (DE)
(72) Erfinder: REIBETANZ, Wilbert, D-70771 Leinfelden-Echterdingen (DE); BAUMANN, Otto, D-70771 Leinfelden-Echterdingen (DE); MUELLER, Rolf, D-70771 Leinfelden-Echterdingen (DE); NEUBERT, Heinz, D-73061 Ebersbach (DE)
(86) Internationale Anmeldenummer: DE9500716
(87) Internationale Veröffentlichungsnummer: WO9533599

(56) Entgegenhaltungen:
- DE-A- 4 104 131
- DE-A- 4 310 835
- DE-U- 8 601 881
- GB-A- 2 158 376
- GB-A- 2 174 934

## Beschreibung

### Stand der Technik

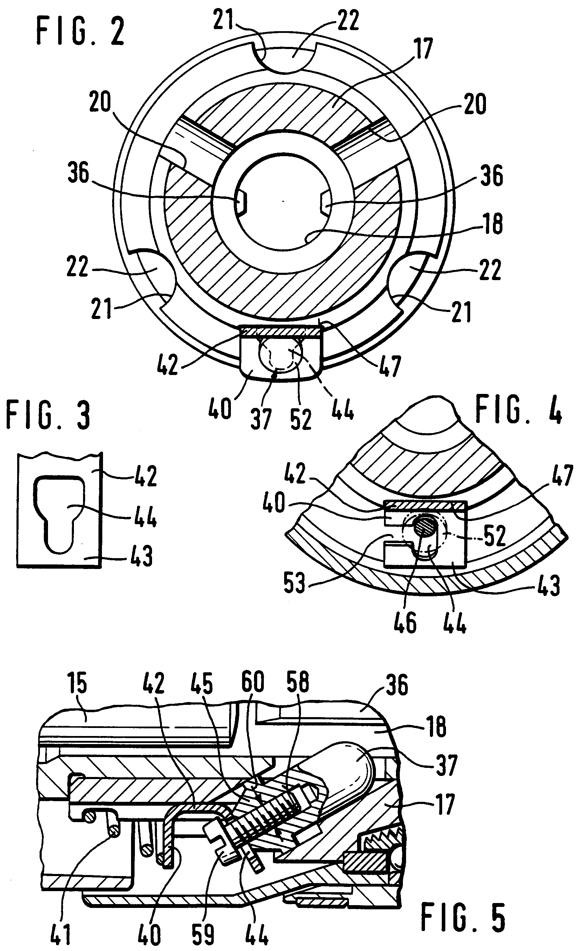

Die Erfindung geht aus von einem Werkzeughalter für eine Handbohrmaschine nach der Gattung des Anspruchs 1 bzw. von einer Handbohrmaschine mit Werkzeughalter nach der Gattung des Anspruchs 10. Es ist schon eine Handbohrmaschine mit Werkzeughalter bekannt (DE 41 04 131 A1, Figuren 4 und 5), bei der zum Verriegeln eines in den Werkzeughalter eingesetzten Werkzeuges mit Nutenschaft wenigstens ein Verriegelungskörper von einem Schließkörper in Eingriff mit einer axial geschlossenen Ausnehmung im Nutenschaftwerkzeug gehalten wird. Der wenigstens eine Verriegelungskörper ist dabei in einer schräg verlaufenden Bohrung angeordnet. Aufgrund der Schräge der Bohrung kann es infolge von Selbsthemmung beim Entriegeln des Werkzeugs insbesondere bei Verwendung von walzenförmigen Verriegelungskörpern zum Klemmen kommen, da diese dann zwischen dem geschlossenen Ende der Ausnehmung im Nutenschaftwerkzeug und der gegenüberliegenden Wandung der Bohrung eingeklemmt werden können.

### Vorteile der Erfindung

Der erfindungsgemäße Werkzeughalter mit den kennzeichnenden Merkmalen des Anspruchs 1 bzw. die erfindungsgemäße Handbohrmaschine mit den kennzeichnenden Merkmalen des Anspruchs 10 hat demgegenüber den Vorteil, daß ein sicheres Entriegeln eines eingesetzten Werkzeuges bei automatischer Verriegelungsmöglichkeit gewährleistet wird. Dies ist insbesondere auch dann der Fall, wenn der wenigstens eine Verriegelungskörper in einer schräg verlaufenden Bohrung angeordnet ist.

Durch die in den Unteransprüchen aufgeführten Maßnahmen sind vorteilhafte Weiterbildungen und Verbesserungen des im Anspruch 1 angegebenen Werkzeughalters bzw. der im Anspruch 10 angegebenen Handbohrmaschine möglich.

### Zeichnung

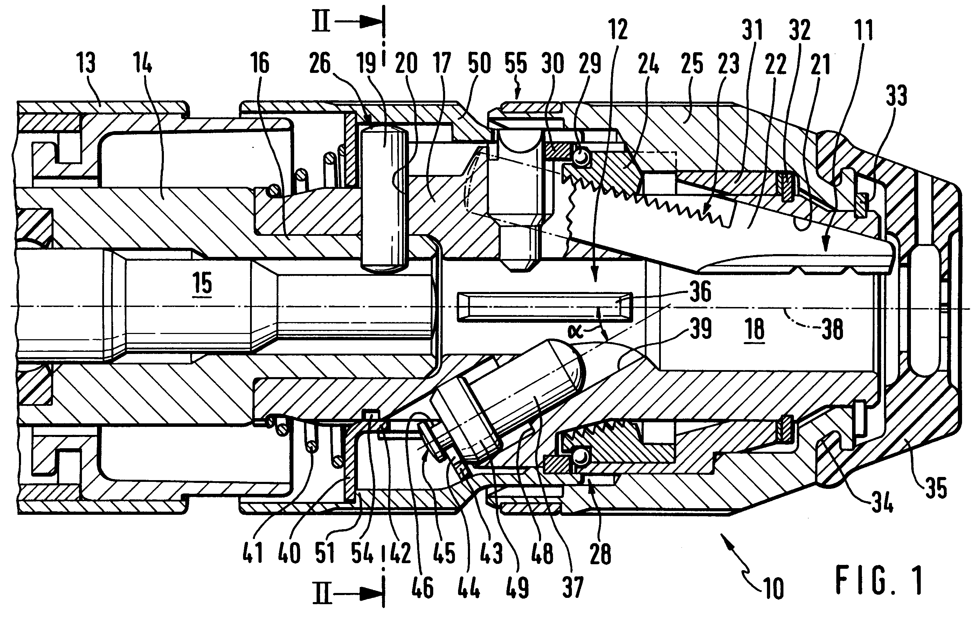

Drei Ausführungsbeispiele der Erfindung sind in der Zeichnung dargestellt und in der nachfolgenden Beschreibung naher erläutert. Figur 1 zeigt einen Längsschnitt durch einen Bohrhammer mit Werkzeughalter gemäß einem ersten Ausführungsbeispiel, Figur 2 einen Schnitt gemäß Linie II-II in Figur 1, Figur 3 eine Teilansicht eines Haltevorsprungs, Figur 4 ein Teilschnitt gemäß einem zweiten Ausführungsbeispiel und Figur 5 ein Teilschnitt gemäß einem dritten Ausführungsbeispiel der Erfindung.

### Beschreibung der Ausführungsbeispiele

Am in Figur 1 dargestellten vorderen, werkzeugseitigen Teil eines Bohrhammers ist ein Werkzeughalter 10 angeordnet. Der Werkzeughalter 10 ist als Kombinations-Werkzeughalter ausgebildet und hat eine erste Werkzeugaufnahme 11 für Werkzeuge mit Rundschaft und eine demgegenüber weiter hinten liegende, zweite Werkzeugaufnahme 12 für Werkzeuge mit Nutenschaft. Aus einem als Spannhals 13 ausgebildeten Teil eines Maschinengehäuses des Bohrhammers ragt eine drehend antreibbare, hohlzylindrische Drehantriebsspindel 14 hervor. Innerhalb der Drehantriebsspindel 14 ist ein axial hin- und hergehend antreibbarer Schlagkörper 15 angeordnet. Auf einem abgesetzten Ende 16 der Drehantriebsspindel 14 sitzt ein Grundkörper 17 mit zentraler Aufnahmebohrung 18. Der Grundkörper 17 ist mit Hilfe von Verbindungsmitteln 26 drehfest und axial unverschiebbar mit der Drehantriebsspindel 14 verbunden. Die Verbindungsmittel 26 sind gemäß dem Ausführungsbeispiel als insgesamt zwei Radialstifte 19 ausgebildet, von denen lediglich einer in Figur 1 um 60 Grad in die Zeichenebene gedreht dargestellt ist. Die Radialstifte 19 sind jeweils in einer radial durch Grundkörper 17 und Wandung der Drehantriebsspindel 14 durchgehenden Durchgangsbohrung 20 angeordnet. Als Verbindungsmittel 26 können auch Verriegelungskugeln bzw. -walzen oder auch ein Gewinde vorgesehen sein.

Im Grundkörper 17 sind insgesamt drei in Umfangsrichtung gleichmäßig versetzt zueinander liegende, radial nach innen vorn verlaufende Ausnehmungen 21 ausgebildet, in denen jeweils eine Spannbacke 22 verschiebbar geführt ist. Die insgesamt drei Spannbacken 22, von denen in der Figur 1 lediglich eine dargestellt ist, sind an ihrer Rückseite in üblicher Weise mit einer Verzahnung 23 versehen, die mit einer korrespondierenden Verzahnung eines Einstellrings 24 in Eingriff steht. Durch Verdrehen des Einstellrings 24 in Umfangsrichtung sind die Spannbacken 22 innerhalb der Ausnehmungen 21 verstellbar. Der Einstellring 24 stützt sich nach hinten, in Richtung auf einen nicht dargestellten Antriebsmotor des Bohrhammers, über kugelförmige Wälzkörper 29 und einen Stützring 30 am Grundkörper 17 ab und ist werkzeugseitig nach vorn durch eine Abstandshülse 31 und einen Sicherungsring 32 gegenüber dem Grundkörper 17 gehaltert. Der Einstellring 24, die Wälzkörper 29 und der Stützring 30 bilden ein Axiallager 28 der ersten Werkzeugaufnahme 11.

Eine Betätigungshülse 25 umgreift den vorderen Teil des Werkzeughalters 10. Die Betätigungshülse 25 ist drehfest mit dem Einstellring 24 verbunden, so daß durch eine Drehung der Betätigungshülse 25 der Einstellring 24 und somit die Spannbacken 22 verstellbar sind. Die Betätigungshülse 25 stützt sich nach hinten an der Abstandshülse 31 bzw. am Einstellring 24 ab und ist nach vorn durch einen Sicherungsring 33 axial gesichert. Die Betätigungshülse 25 trägt in einer Nut 34 eine Staubkappe 35, die den vorderen Teil der Werkzeughalterung 10 gegenüber einem darin einzusteckenden Werkzeug staubdicht abschließt.

Die zweite Werkzeugaufnahme 12 weist an der Wandung der Aufnahmeöffnung 18 wenigstens einen leistenförmigen Drehmitnehmer 36 zur Drehmitnahme eines einzusetzenden Nutenschaftwerkzeuges auf. Ein Verriegelungskörper 37 ist in einer im Grundkörper 17 angeordneten Bohrung 39 verschiebbar geführt. Die Bohrung 39 verläuft schräg von außen hinten nach innen vorn im Grundkörper 17 und schließt mit einer Längsachse 38 des Werkzeughalters 10 einen spitzen Winkel α ein. Der Winkel α ist dabei so festgelegt, daß zwischen eingesetztem Nutenschaftwerkzeug und Verriegelungskörper 37 Selbsthemmung besteht, wenn das Werkzeug nach vorn bewegt wird. Der Winkel α beträgt dann vorzugsweise etwa 30 Grad. Selbstverständlich können auch mehrere Verriegelungskörper 37 in mehreren Bohrungen 39 vorgesehen sein.

Der Verriegelungskörper 37 kann teilweise radial in die Aufnahmeöffnung 18 eingreifen. Bei eingesetztem Nutenschaftwerkzeug ragt der Verriegelungskörper 37 dabei in bekannter Weise in eine axial geschlossene Verriegelungsausnehmung im Werkzeugschaft ein und haltert dieses somit axial in Grenzen verschiebbar innerhalb der zweiten Werkzeugaufnahme 12. Über einen Schließkörper 40 ist der Verriegelungskörper 37 von der Kraft einer Schließfeder 41 mit einer Kraft in Richtung auf seine Verriegelungsstellung beaufschlagt. Die Bohrung 39 weist eine Stufe 48 auf, die mit einem am Verriegelungskörper 37 ausgebildeten Bund 49 einen Anschlag bildet. Der Anschlag begrenzt das radiale Eintauchen des Verriegelungskörpers 37 in die Aufnahmeöffnung 18.

Der Schließkörper 40 ist überwiegend ringförmig ausgebildet und hat einen sich zunächst axial zum Verriegelungskörper 37 zu erstreckenden Vorsprung 42, der zu seinem Ende 43 hin radial nach außen abgewinkelt ist und einen Durchbruch 44 aufweist. Der Verriegelungskörper 37 hat etwa die Form eines Zylinderstiftes und trägt an einer Rückseite 45 eine Einschnürung 46, in die der Vorsprung 42 formschlüssig eingreift.

Der Schließkörper 40 ist umgeben von einer Entriegelungshülse 50, die axial nach hinten verschiebbar ist und dabei über einen Absatz 51 den Schließkörper 40 entgegen der Federkraft der Schließfeder 41 mitnimmt. Aufgrund des Formschlusses zwischen dem Vorsprung 42 und dem Verriegelungskörper 37 ist beim Verschieben der Entriegelungshülse 50 nach hinten ein sicheres Herausziehen des Verriegelungskörpers 37 aus der Verriegelungsausnehmung eines eingesteckten Werkzeugschafts gewährleistet. Ferner ist der Werkzeughalter 10 mit einer Arretiervorrichtung 55 für die Spannbacken 22 versehen, die bei in die zweite Werkzeugaufnahme 12 eingesetztem Werkzeugschaft den Einstellring 24 undrehbar und damit die Spannbacken 22 unverstellbar arretieren.

In Figur 2 ist ein Schnitt durch den Grundkörper 17 entlang der Linie II-II in Figur 1 gezeigt. Der Grundkörper 17 ist dabei von der Drehantriebsspindel 14 abgenommen und folglich ohne Radialstifte 19 und Entriegelungshülse 50 gezeigt. Erkennbar ist die zentrale Aufnahmeöffnung 18 mit zwei nach innen vorspringenden Drehmitnehmern 36, sowie die beiden radial verlaufenden Durchgangsbohrungen 20 für die Radialstifte 19, die hier in der vorgesehenen Winkellage zueinander dargestellt sind. Ferner sind die Ausnehmungen 21 für die Spannbacken 22 erkennbar. In der unteren Schnitthälfte von Figur 2 ist der Schließkörper 40 dargestellt mit dem Vorsprung 42 und dem darin angeordnetem, gestrichelt angedeutetem Druchbruch 44. Der Verriegelungskörper 37 ist mit einem Kopf 52 im Durchbruch 44 eingehängt, so daß der Verriegelungskörper 37 mit dem Schließkörper 40 formschlüssig gekoppelt ist. Im Grundkörper 17 ist eine axiale Führungsnut 47 angeordnet, in der der Vorsprung 42 des Schließkörpers 40 axial verschiebbar geführt ist.

In Figur 3 ist der Vorsprung 42 dargestellt. Der Durchbruch 44 verjüngt sich zum abgewinkelten Ende 43 des Vorsprungs 42. In seinem endseitigen Bereich hat der Durchbruch 44 eine Breite, die etwa dem Durchmesser der Einschnürung 46 des Verriegelungskörpers 37 entspricht. Näher zum Schließkörper 40 hin erweitert sich der Durchbruch 44 derart, daß der Kopf 52 des Verriegelungskörpers 37 den Vorsprung 42 passieren kann. Allerdings ist dies nur bei aus der Durchgangsbohrung 20 herausgenommenen Radialstiften 19 möglich. Beim in Figur 1 gezeigten, komplett montierten Werkzeughalter 10 wird der Verriegelungskörper 37 ausschließlich im vorderen, verengten Teil des Durchbruchs 44 gehalten, da die Radialstifte 19 hier einen axialen Anschlag für den Schließkörper 40 bilden.

In Figur 4 ist ein zweites Ausführungsbeispiel des Vorsprungs 42 dargestellt. Gleiche und gleichwirkende Teile sind, wie auch beim nachfolgenden dritten Ausführungsbeispiel, durch die gleichen Bezugszeichen gekennzeichnet. Der Durchbruch 44 weist hier eine einheitliche Breite auf, die etwa dem Durchmesser der Einschnürung 46 entspricht. Seitlich befindet sich am Vorsprung 42 ein Montageschlitz 53. Die Verbindung von Verriegelungskörper 37 und Vorsprung 42 erfolgt bei von der Drehantriebsspindel 14 abgenommenem Grundkörper 17. Der Schließkörper 40 läßt sich dann axial bis über die Durchgangsbohrung 20 nach vorn verschieben, bis er radial mit einer Montagenut 54 im Grundkörper 17 in Deckung kommt. In dieser Stellung läßt sich der Schließkörper 40 in radialer Richtung exzentrisch versetzen, indem er in die Montagenut 54 etwas eintaucht, so daß dessen Vorsprung 42 aus der Führungsnut 47 in Umfangsrichtung verdrehbar ist. Der Vorsprung 42 gibt dann den Verriegelungskörper 37 und die Bohrung 39 frei, so daß der Verriegelungskörper 37 von innen in diese einsetzbar bzw. aus dieser herausnehmbar ist. Im Gegensatz dazu ist beim auf der Drehantriebsspindel 14 montierten Werkzeughalter nach Figur 1 der Schließkörper 40 infolge der dann eingesetzten Verbindungskörper 26 nicht in seine Demontagestellung oberhalb der Montagenut 54 bringbar. Im übrigen ist das Vorsehen einer Montagenut 54 zum Herausschwenken des Vorsprungs 42 aus der Führungsnut 47 auch bei allen anderen Ausführungsbeispielen (siehe insbesondere Figur 1) möglich.

In Figur 5 ist ein drittes Ausführungsbeispiel für die Verbindung von Schließkörper 40 und Verriegelungskörper 37 dargestellt. Der Verriegelungskörper 37 weist auf seiner Rückseite 45 eine Gewindebohrung 58 auf, in die eine Schraube 59 einschraubbar ist. Der Durchbruch 44 im Vorsprung 42 hat hier eine nur unwesentlich größere Breite als ein Schaftdurchmesser 60 der Schraube 59.

Bei allen drei beschriebenen Ausführungsbeispielen ist eine automatische Verriegelung eines Werkzeugschaftes gewährleist. Beim Einsetzen eines derartigen Werkzeugschaftes wird der Verriegelungskörper 37 entgegen der Federkraft 41 nach hinten verschoben, bis er die Aufnahmeöffnung 18 freigibt. Nach Passieren des Schaftendes am Verriegelungskörper 37 vorbei schnappt dieser selbsttätig in die axial geschlossene Verriegelungsausnehmung im Nutenschaftwerkzeug ein, wodurch das Werkzeug verriegelt wird. Wird das Werkzeug anschließend wieder nach vorn bewegt, z.B. geschlagen oder gezogen, verhindert die selbsthemmende Wirkung des Verriegelungskörpers 37 in der schrägen Bohrung 39 ein Herausgleiten des Werkzeugs aus der Aufnahmeöffnung 18.

Die Erfindung ist nicht auf die gezeigten Ausführungsbeispiele beschränkt. So ist eine formschlüssige Verbindung des Verriegelungskörpers 37 mit dem Schließkörper 40 auch bei Werkzeughaltern ausführbar, die lediglich mit einer Werkzeugaufnahme für Werkzeuge mit Nutenschaft versehen sind.

## Patentansprüche

1. Werkzeughalter für eine Handbohrmaschine, insbesondere für einen Bohrhammer, mit einem Grundkörper (17) mit darin angeordneter Aufnahmeöffnung (18) für Werkzeuge mit Nutenschaft, mit wenigstens einem Verriegelungskörper (37), der in einer Bohrung (39) im Grundkörper (17) angeordnet ist, der zur Verriegelung eines einzusetzenden Werkzeugs radial in die Aufnahmeöffnung (18) eingreifen kann und der in dieser Stellung von einem Schließkörper (40) gehalten wird, dadurch gekennzeichnet, daß der Verriegelungskörper (37) mit dem Schließkörper (40) formschlüssig gekoppelt ist, indem der Verriegelungskörper (37) an seiner Rückseite (45) einen Kopf (52) mit Einschnürung (46) aufweist, in die ein am Schließkörper (40) ausgebildeter und mit einem Durchbruch (44) versehener Vorsprung (42) einfaßt.

2. Werkzeughalter nach Anspruch 1, dadurch gekennzeichnet, daß die Bohrung (39) im Grundkörper (17) schräg von außen hinten nach innen vorn verläuft und mit einer Längsachse (38) des Werkzeughalters (10) einen spitzen Winkel (α) einschließt.

3. Werkzeughalter nach Anspruch 2, dadurch gekennzeichnet, daß der Winkel (α) etwa 30 Grad beträgt.

4. Werkzeughalter nach einem der vorhergehenden Ansprüche, dadurch gekennzeichnet, daß der Verriegelungskörper (37) etwa die Form eines Zylinderstiftes hat und an seinem inneren Ende halbkugelförmig abgerundet ist.

5. Werkzeughalter nach Anspruch 4, dadurch gekennzeichnet, daß der Schließkörper (40) überwiegend ringförmig ist.

6. Werkzeughalter nach Anspruch 5, dadurch gekennzeichnet, daß der Vorsprung (42) in einer axialen Führungsnut (47) des Grundkörpers (17) angeordnet ist.

7. Werkzeughalter nach Anspruch 6, dadurch gekennzeichnet, daß der Grundkörper (17) mit einer Montagenut (54) versehen ist und der Schließkörper (40) in axialer Deckung mit der Montagenut (54) bringbar ist, wobei der Schließkörper (40) in dieser Stellung in die Montagenut (54) eintauchbar und dann mit seinem Vorsprung (42) aus der Führungsnut (47) in Umfangsrichtung verdrehbar ist.

8. Werkzeughalter nach Anspruch 1, dadurch gekennzeichnet, daß der Werkzeughalter (10) zusätzlich zur Werkzeugaufnahme für Nutenschaftwerkzeuge eine dieser vorgeordnete, als Bohrfutter ausgebildete Werkzeugaufnahme für Rundschaftwerkzeuge aufweist.

9. Werkzeughalter nach einem der vorhergehenden Ansprüche, dadurch gekennzeichnet, daß der Verriegelungskörper (37) an seiner Rückseite (45) eine Gewindebohrung (60) hat, in der eine Schraube (59) einschraubbar ist, welche den Schließkörper (40) mit dem Verriegelungskörper (37) formschlüssig koppelt.

10. Handbohrmaschine, insbesondere Bohrhammer, dadurch gekennzeichnet, daß die Handbohrmaschine einen Werkzeughalter (10) nach einem der Ansprüche 1 bis 9 aufweist.

## Claims

1. Tool holder for a hand drill, particularly a hammer drill, with a basic element (17) with a receiving opening (18), arranged therein, for tools with a slotted shank, with at least one locking element (37), which is arranged in a hole (39) in the basic element (17) and, to lock a tool to be inserted, can engage radially in the receiving opening (18) and is held in this position by a closing element (40), characterized in that the locking element (37) is coupled positively to the closing element (40) by the locking element (37) having, on its rear side (45), a head (52) with a necked-down portion (46) into which a projection (42), which is formed on the closing element (40) and is provided with an opening (44), grasps.

2. Tool holder according to Claim 1, characterized in that the hole (39) in the basic element (17) extends obliquely from the outside at the rear to the inside at the front and encloses an acute angle (α) with a longitudinal axis (38) of the tool holder (10).

3. Tool holder according to Claim 2, characterized in that the angle (α) is about 30 degrees.

4. Tool holder according to one of the preceding claims, characterized in that the locking element (37) has approximately the shape of a cylindrical pin and is rounded in the form of a hemisphere at its inner end.

5. Tool holder according to Claim 4, characterized in that the closing element (40) is predominantly annular.

6. Tool holder according to Claim 5, characterized in that the projection (42) is arranged in an axial guide groove (47) of the basic element (17).

7. Tool holder according to Claim 6, characterized in that the basic element (17) is provided with an assembly groove (54) and the closing element (40) can be moved into axial overlap with the assembly groove (54), in this position the closing element (40) being able to enter into the assembly groove (54) and its projection (42) then being rotatable out of the guide groove (47) in the circumferential direction.

8. Tool holder according to Claim 1, characterized in that, in addition to the tool receiver for slotted-shank tools, the tool holder (10) has a tool receiver, arranged ahead of the abovementioned tool receiver and designed as a drill chuck, for round-shank tools.

9. Tool holder according to one of the preceding claims, characterized in that the locking element (37) has, on its rear side (45), a threaded hole (60) into which a screw (59) that couples the closing element (40) positively to the locking element (37) can be screwed.

10. Hand drill, particularly a hammer drill, characterized in that the hand drill has a tool holder (10) according to one of Claims 1 to 9.

## Revendications

1. Porte-outil pour une perceuse à main notamment un perforateur comprenant un corps de base (17) avec un logement (18) pour des outils avec un corps à rainure, au moins un organe de verrouillage (37) prévu dans un perçage (39) du corps de base (17) et servant à verrouiller un outil mis en place, en prenant radialement dans le logement (18) et qui est maintenu dans cette position par un organe de fermeture (40),
caractérisé en ce que
l'organe de verrouillage (37) est couplé par une liaison par la forme avec l'organe de fermeture (40) en ce que le corps de verrouillage (37) comporte sur son côté arrière (45), une tête (52) avec une gorge (46) dans laquelle vient prendre une partie en saillie (42) prévue sur l'organe de fermeture (40) et ayant un passage (44).

2. Porte-outil selon la revendication 1,
caractérisé en ce que
le perçage (39) du corps de base (17) est dirigé en biais de l'extérieur, de l'arrière vers l'intérieur et l'avant et il forme un angle aigu (α) avec l'axe longitudinal (38) du porte-outil (10).

3. Porte-outil selon la revendication 2,
caractérisé en ce que
l'angle (α) correspond à environ 30 degrés.

4. Porte-outil selon l'une quelconque des revendications précédentes,
caractérisé en ce que
l'organe de verrouillage (37) a sensiblement la forme d'une tige cylindrique et son extrémité intérieure est arrondie suivant une forme hémisphérique.

5. Porte-outil selon la revendication 4,
caractérisé en ce que
l'organe de fermeture (40) est principalement de forme annulaire avec une saillie axiale (42).

6. Porte-outil selon la revendication 5,
caractérisé en ce que
la saillie (42) est placée dans une rainure de guidage axial (47) du corps de base (17).

7. Porte-outil selon la revendication 6,
caractérisé en ce que
le corps de base (17) est muni d'une rainure de montage (54) et l'organe de fermeture (40) peut être mis en coïncidence axiale avec la rainure de montage (54) et dans cette position l'organe de fermeture (40) peut plonger dans la rainure de montage (54) et alors il peut être tourné avec sa partie en saillie (42) hors de la rainure de guidage (47) dans la direction périphérique.

8. Porte-outil selon la revendication 1,
caractérisé en ce que
le porte-outil (10) comporte en outre un logement pour recevoir un outil dont la tige est munie de rainures, en comportant un logement pour outils réalisé en forme de mandrin pour des outils à tige de section ronde.

9. Porte-outil selon l'une quelconque des revendications précédentes,
caractérisé en ce que
le corps de verrouillage (37) comporte sur son côté arrière (45) un taraudage (60) dans lequel se place une vis (59) qui relie l'organe de fermeture (40) au corps de verrouillage (37) par une liaison par la forme.

10. Perceuse à main notamment perforateur,
caractérisé en ce qu'
il comporte un porte-outil (10) selon l'une quelconque des revendications 1 à 9.
